# EUROPÄISCHE PATENTSCHRIFT

(11) **EP 1 046 335 B1**
(45) Veröffentlichungstag und Bekanntmachung des Hinweises auf die Patenterteilung: **18.02.2004**
(21) Anmeldenummer: 00107741.1
(22) Anmeldetag: 11.04.2000
(51) Int. Cl.: A01D 78/10

(54) **Heuwerbungsmaschine mit verstellbarem Prallelement**
Haymaking machine with adjustable impingement element
Machine de fenaison à élément d'impact réglable

(30) Priorität: 22.04.1999 DE 19918194
(43) Veröffentlichungstag der Anmeldung: 25.10.2000
(73) Patentinhaber: CLAAS Saulgau GmbH, 88340 Bad Saulgau (DE)
(72) Erfinder: Deni, Franz, 88348 Saulgau (DE)

(56) Entgegenhaltungen:
- DE-A- 2 053 650
- DE-A- 2 431 366
- DE-B- 1 236 262
- DE-B- 2 127 701
- DE-U- 1 847 623
- FR-A- 2 342 639
- NL-A- 6 901 284

## Beschreibung

Die Erfindung betrifft eine Heuwerbungsmaschine gemäß dem Oberbegriff des Anspruchs 1. Derartige Heuwerbungsmaschinen nehmen mit ihren an Tragarmen lösbar angeordneten Rechzinken auf dem Boden liegendes Erntegut auf, wobei die Rechzinken das Erntegut zur Beschleunigung des Trocknungsprozesses während der Förderung wenigstens teilweise deformieren und es anschließend wieder in Breitablage auf den Boden schleudern. Die deutschen Patentschriften DE 24 48 546 und DE 24 49 413 offenbaren sogenannte Universal- Heuwerbungsmaschinen, die auf dem Boden liegendes Erntegut sowohl Wenden als auch Schwaden können. Zur Realisierung dieser Doppelfunktion sind den um annähern vertikale Achsen umlaufenden als Rechkreisel ausgeführten Arbeitsorganen im rückwärtigen Bereich oder quer zur Fahrtrichtung Schwadorgane zugeordnet, die es ermöglichen, das von den Zinken der Rechkreisel geförderte Erntegut zu einem Erntegutschwad zusammenzuführen, um nachfolgenden Erntesystemen, wie beispielsweise Erntegutpressen, die Aufnahme zu erleichtern. Werden derartige Universal-Heuwerbungsmaschinen als reine Heuwender eingesetzt, so müssen die Schwadorgane aus dem Arbeitsbereich der Rechkreisel verbracht, im allgemeinen verschwenkt werden. Wird eine so veränderte Universal-Heuwerbungsmaschine zum Wenden des Randschwades eingesetzt, so kann es in Abhängigkeit von den Ernteguteigenschaften und der rechkreiseldrehzahlabhängigen Beschleunigung des aufgenommenen Erntegutes dazu kommen, daß ein Teil des Erntegutes über die Begrenzug der jeweiligen Erntefläche hinausgeworfen wird, so daß funktionsbedingt Erntegutverluste auftreten. Um diesen Nachteil zu vermeiden, verfügen Heuwerbungsmaschinen, die ausschließlich zum Wenden des Erntegutes eingesetzt werden über Laufradverstellmechanismen, die es ermöglichen, die Lage der Heuwerbungsmaschine zum Trägerfahrzeug so zu verändern, daß das von den äußeren Rechkreiseln beschleunigte Erntegut nicht mehr über die Erntefläche hinausgeworfen wird. Beispielhaft sei aus dem umfangreichen Stand der Technik auf die deutsche Offenlegungsschrift DE-OS 195 43 429 verwiesen, in der ein die Verstellhebel der Laufräder der einzelnen Arbeitsorgane verbindender Verstellmechanismus offenbart ist, über den die Stellung der Laufräder und damit die Lage der Heuwerbungsmaschine zum Trägerfahrzeug verändert werden kann. Derartige Verstellmechanismen sind jedoch konstruktiv aufwendig und teuer. Andererseits erfordern manuelle Laufradverstellungen einen hohen Bedienaufwand, da jedes Laufrad der Heuwerbungsmaschine separat verstellt werden muß, wobei die Handhabung des Verstellens dadurch erschwert wird, daß die Laufradverstellelemente im allgemeinen innerhalb der rechzinkentragenden Rechkreisel liegen und dadurch schwer zugänglich sind und außerdem immer ein Verletzungsrisiko für die Bedienperson darstellen. Ferner verfügt eine auf diese Weise in ihrer Lage zum Trägerfahrzeug veränderte Maschine bei Kurvenfahrt nur über einen geringen oder im ungünstigsten Fall vollständig "aufgebrauchten" Nachlaufbereich, so daß die Heuwerbungsmaschine nach einer Seite nicht mehr nachlaufen kann und die Räder auf dem Boden schurren. Neben Deformationen an den Laufradachsen führt dies außerdem zu einem erhöhten Reifenverschleiß.

Der Erfindung liegt deshalb die Aufgabe zugrunde, eine Heuwerbungsmaschine gemäß dem Oberbegriff des Anspruchs 1 so zu gestalten, daß eine verlustfreie Bearbeitung von Randschwaden möglich wird, ohne konstruktiv aufwendige und teure Laufradverstellungen vorzusehen, deren manuelle Verstellung zudem immer auch ein Verletzungsrisiko für die Bedienperson in sich birgt.
Erfindungsgemäß wird die Aufgabe durch eine Heuwerbungsmaschine mit den kennzeichnenden Merkmalen des Anspruchs 1 gelöst.

Indem wenigstens einem der äußeren, von einer Arbeits- in eine Transportstellung verschwenkbaren Arbeitsorgane ein um eine schräg zur Fahrtrichtung verlaufende Achse verschwenkbares Prallelement in der Weise zugeordnet wird, daß es in Arbeitsposition im rückwärtigen Bereich des verschwenkbaren äußeren Rechkreisels in Fahrtrichtung weisend und in Nichtarbeitsposition quer zur Fahrtrichtung und oberhalb dieses äußeren Rechkreisels angeordnet ist, wird auf konstruktiv einfache und kostengünstige Weise sichergestellt, daß bei der Bearbeitung von Randschwaden kein Erntegut über die bearbeitete Erntefläche hinausgeworfen wird, wodurch derartige Erntegutverluste vermieden werden.

In vorteilhafter Weiterbildung der Erfindung kann die Schwenkachse um etwa 45° geneigt zur Fahrtrichtung angeordnet sein, so daß das in seine Nichtarbeitsposition verschwenkte Prallelement eine Lage oberhalb der Arbeitsorgane einnimmt, die beim Verschwenken der Arbeitsorgane von der Arbeits- in die Transportstellung auf einfache Weise Kollisionsfreiheit zwischen dem Prallelement und den übrigen Bauteilen der Heuwerbungsmaschine gewährleistet.

Zur Vereinfachung des Verstellvorganges und damit verbunden zur Reduzierung der Verletzungsgefahr für die Bedienperson kann die Schwenkachse im einfachsten Fall durch einen verdrehbaren Bolzen gebildet werden, dessen Verdrehung vorteilhafter Weise auch mittels Verstellelementen fremdbetätigt auslösbar ist, so daß für die Bedienperson manuelle Verstelltätigkeit vollständig entfällt.

Zur Erhöhung der Betriebssicherheit kann die das verschwenkbare Prallelement aufnehmende Achse auch in wenigsten zwei Stellungen, nämlich der Arbeits- und der Nichtarbeitsposition des Prallelementes, feststellbar sein.

In einer weiteren vorteilhaften Ausführung kann das in seine Nichtarbeitsposition verschwenkte Prallelement so angeordnet sein, daß es beim Verschwenken des ihm zugeordneten Rechkreisels um eine in Fahrtrichtung weisende Achse in die Transportstellung in eine Lage gelangt, in der es die Rechzinken des die Transportbreite begrenzenden Rechkreisel im rückwärtigen Bereich wenigstens teilweise abschirmt und damit neben der Verringerung der Verletzungsgefahr an den Rechzinken in diesem Bereich gleichzeitig die Funktion von Warntafeln übernehmen kann.

In einer weiteren vorteilhaften Ausgestaltung soll das wenigstens eine Prallelement auch um eine in Fahrtrichtung weisende Drehachse verstellbar sein, so daß das Prallelement in kostengünstiger Weise auch von Hand verschwenkt werden kann, ohne das sich die verstellende Bedienperson im mögliche Verletzungen verursachenden Bereich der Arbeitsorgane aufhalten muß.

Zur Vereinfachung der Durchführung des Verschwenkvorganges des Prallelementes mittels in Fahrtrichtung weisender Drehachse kann die Drehachse verschiedene Raststellungen aufweisen.

Eine weitere konstruktiv sehr einfache Ausführung wird dann erreicht, wenn das Schwdtuch an einer sich quer zur Fahrtrichtung erstreckenden Schwenkachse angeordnet ist, mittels derer das Prallelement im rückwärtigen Bereich der Arbeitsorgane einfach von der Arbeitsposition in eine vertikale Nichtarbeitsposition geklappt wird.

Vorteilhafte Ausgestaltungen sind Gegenstand weiterer Unteransprüche und werden anhand eines in Zeichnungen dargestellten Ausführungsbeispiels näher erläutert.

Es zeigen
- Figur 1: die erfindungsgemäße Heuwerbungmaschine in Arbeitsstellung in der Rückansicht
- Figur 2: einen verschwenkbaren äußeren Zinkenkreisel mit erfindungsgemäßem Prallelement in der Arbeitstsellung und in Detailansicht von oben

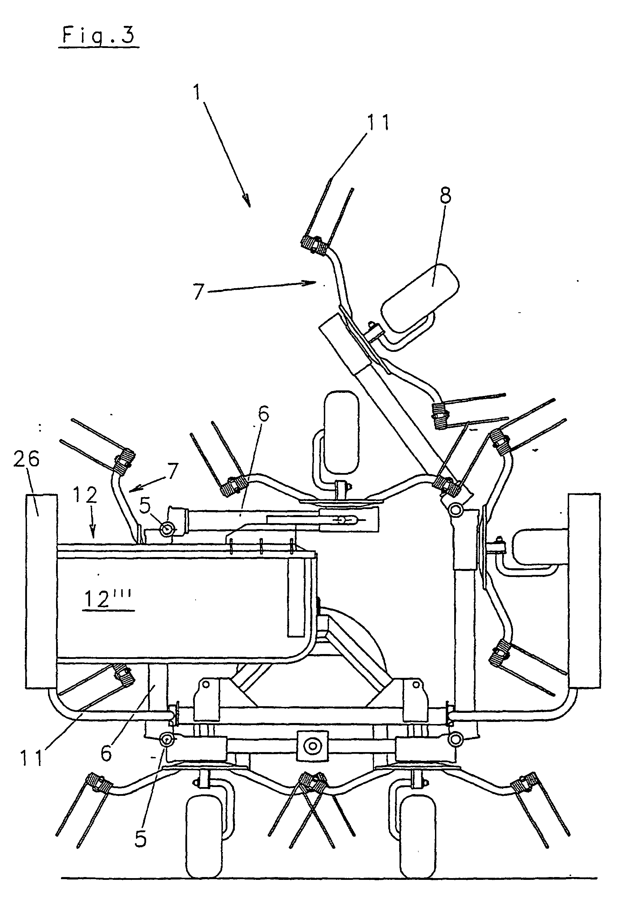

- Figur 3: die erfindungsgemäße Heuwerbungmaschine in Transportstellungstellung in der Rückansicht

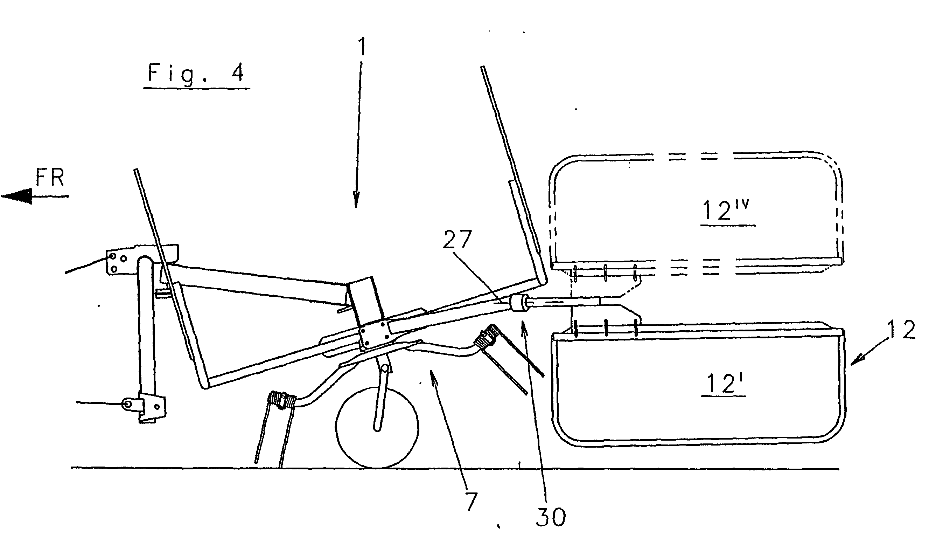

- Figur 4: eine weitere erfindungsgemäße Heuwerbungsmaschine in Seitenansicht

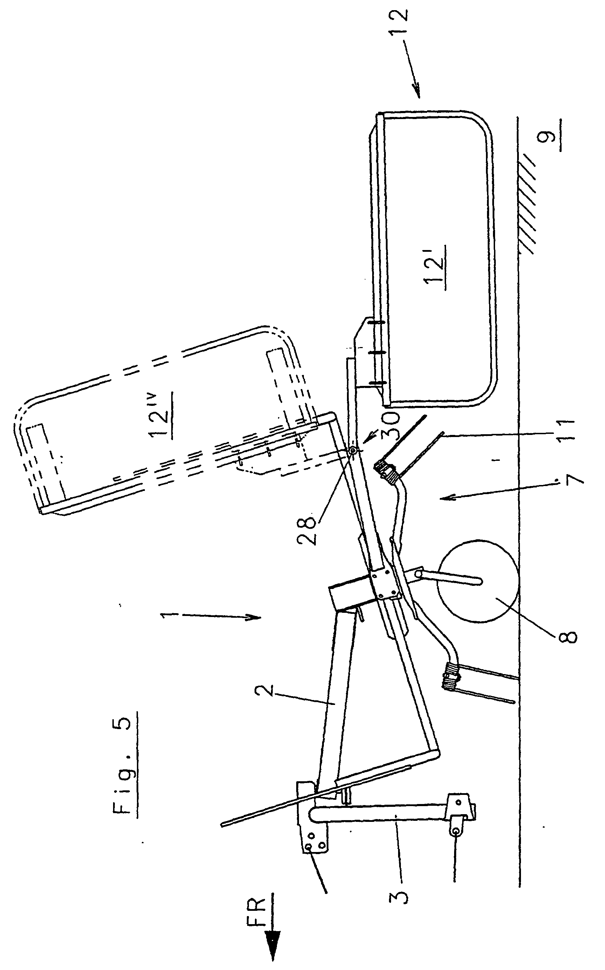

- Figur 5: eine weitere erfindungsgemäße Heuwerbungsmaschine in Seitenansicht.

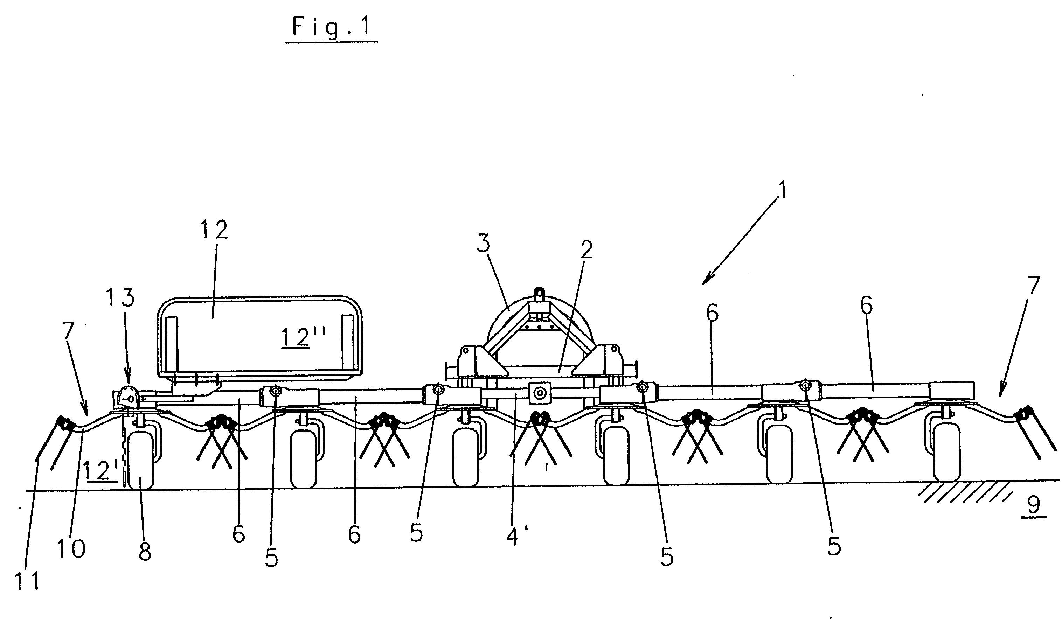

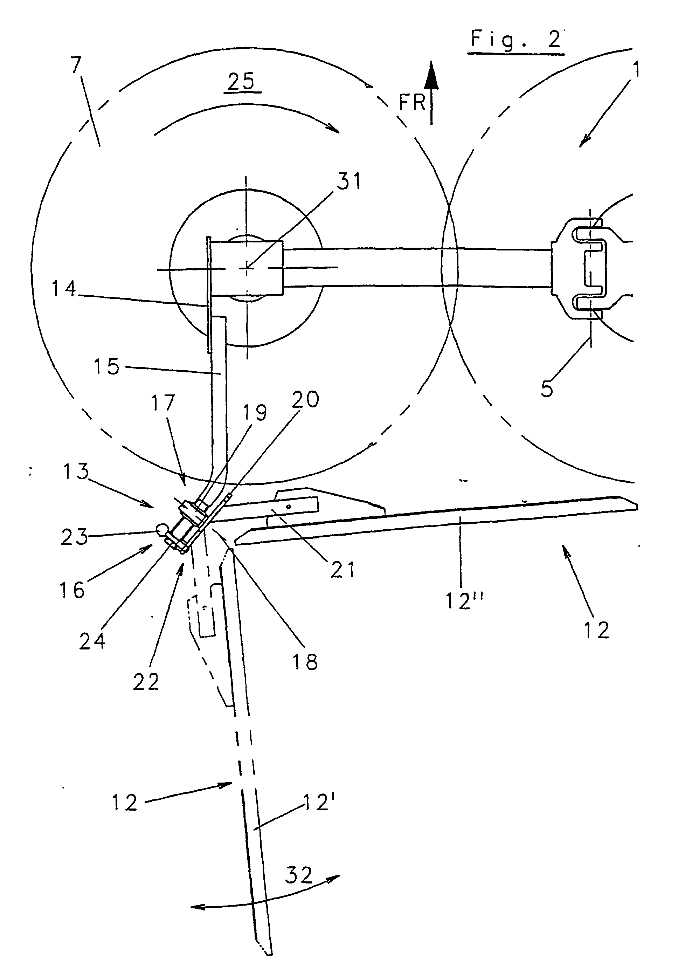

Figur 1 zeigt eine Heuwerbungsmaschine 1, deren nichtverschwenkbarer Hauptrahmen 2 frontseitig über einen die Adaptierung der Heuwerbungsmaschine 1 an ein nicht dargestelltes Trägerfahrzeug ermöglichenden Anbaubock 3 verfügt. Im rückwärtigen Bereich nimmt der Hauptrahmen 2 einen ebenfalls nicht verschwenkbaren Hilfsrahmen 4 und über in Fahrtrichtung verlaufende Schwenkachsen 5 mit dem Hilfsrahmen 4 und untereinander verbundene Seitenrahmen 6 auf. Hilfs- und Seitenrahmen 4, 6 tragen als Rechkreisel 7 ausgeführte Arbeitsorgane, die untenseitig über jeweils wenigstens ein Laufrad 8 am Boden 9 abgestützt werden und deren Zinkenarme 10 über das Erntegut aufnehmende Rechzinken 11 verfügen. Erfindungsgemäß ist wenigstens einem der äußeren um Schwenkachse 5 verschwenkbaren Rechkreisel 7 ein Prallelement 12 zugeordnet, welches über einen noch näher zu beschreibenden Verschwenkmechanismus 13 von einer Arbeitsposition 12^{I} (gestrichelte Darstellung in Figur 1) in eine Nichtarbeitsposition 12^{II} bewegt werden kann. Die Anbringung des erfindungsgemäßen Prallelements 12 ist dabei nicht auf die dargestellte Ausführung beschränkt, sondern kann auch beidseitig an den äußeren verschwenkbaren Rechkreiseln 7 oder abweichend von der Darstellung auch nur am in Fahrtrichtung linken Rechkreisel 7 vorgesehen sein, wobei die Anzahl der von der Heuwerbungsmaschine 1 aufgenommenen Rechkreisel 7 ebenfalls nicht auf die dargestellte Anzahl beschränkt ist.
Die nähere Beschreibung des Verstellmechanismus 13 erfolgt anhand der Figur 2. Der um die in Fahrtrichtung FR verlaufende Schwenkachse 5 von der Arbeits- in die Transportstellung und umgekehrt verschwenkbare, schematisch dargestellte äußere Rechkreisel 7 verfügt obenseitig über einen Halteflansch 14, der anderenends mit einen Tragarm 15 verbunden ist. Das freie Ende des Tragarms 15 wird von zwei Bohrungen 16, 17 durchsetzt, wobei Bohrung 17 die schräg zur Fahrtrichtung FR verlaufende, einfachstenfalls als Bolzen 19 ausgeführte Schwenkachse 18 drehbar aufnimmt. An seiner dem Tragarm 15 abgewandten Seite verfügt der Bolzen 19 über einen Halteflansch 20, der wiederum auf der dem Tragarm 15 abgewandten Seite über eine Verbindungsstrebe 21 mit dem Prallelement 12 verbunden ist. Der Halteflansch 20 ist in seinem rückwärtigen Bereich so weit verlängert, daß er die Bohrung 16 vollständig überdeckt. Im Bereich der Bohrung 16 wird der Halteflansch von wenigstens zwei Öffnungen 22 durchsetzt, in welche der von Bohrung 16 aufgenommene Absteckbolzen 23 bewegt und durch an sich bekannte und deshalb nicht näher dargestellte Sicherungselemente in seiner Lager arretiert werden kann. In einer weiteren vorteilhaften Weise ist es auch möglich den Absteckbolzen 23 gegen die Wirkung einer Feder 24 verschiebbar auszuführen, so daß Absteckbolzen 23 die Funktion eines Schnappverschlusses erhält. Durch die in Halteflansch 20 befindlichen wenigstens zwei Öffnungen 22 und ihr Zusammenwirken mit Absteckbolzen 23 wird ermöglicht, daß das Prallelement 12 in wenigstens zwei Stellungen 12^{I}, 12^{II} verschwenk- und feststellbar ist. Erfindungsgemäß nimmt Prallelement 12 in Arbeitsposition 12^{I} eine in Fahrtrichtung FR weisende Lage im rückwärtigen Bereich des Rechkreisels 7 ein, so daß das gemäß Pfeilrichtung 25 von Rechkreisel 7 beschleunigte Erntegut im Bereich des Prallelementes 12, 12^{I} in seiner Ausbreitung quer zur Fahrtrichtung FR begrenzt wird. Auf diese Weise wird sichergestellt, daß bei der Bearbeitung eines Feldrandes mit der erfindungsgemäßen Heuwerbungsmaschine 1 ein Schleudern des Erntegutes über den Feldrand vermieden wird. Benötigt man dagegen die seitliche Begrenzung der Erntegutverteilung nicht, kann erfindungsgemäß Prallelement 12 nach dem Herausziehen des Absteckbolzens 23 aus einer der Öffnungen 22 auf einfache Weise in eine Nichtarbeitsposition 12^{II} verschwenkt und wieder mittels Absteckbolzen 23 und wenigstens einer weiteren Öffnung 22 arretiert werden, in der das Prallelement 12 in eine Position oberhalb des Rechkreisels 7 und quer zur Fahrtrichtung FR gelangt. In einer vorteilhaften Weiterbildung der Erfindung kann das Prallelement 12 mit der Verbindungsstrebe 21 auch so verbunden sein, daß das Prallelement 12 in Position 12^{I} innerhalb eines Einstellbereiches 32 verschwenk- und feststellbar ist.

Es liegt im Rahmen der Erfindung, daß die in Figur 2 dargestellte manuelle Verstellung des Prallelements 12 auch durch eine nicht dargestellte fernbetätigte Verstellung ersetzt sein kann, wobei die Verstellmittel hydraulischer, pneumatischer oder mechanischer Art, beispielsweise ein Zugseil, sein können und durch die Bedienperson vom nichtdargestellten Zugfahrzeug aus bedienbar sind. Damit das Prallelement 12 in seiner Nichtarbeitsposition 12^{II} eine Lage einnimmt, in der es beim Verschwenken des jeweils äußeren Rechkreisels 7 von der Arbeits- in die Transportstellung zu keiner Kollision mit Teilen der übrigen Heuwerbungsmaschine 1 kommt, ist es besonders zweckmäßig die Schwenkachse 18 um annähernd 45° zur Fahrtrichtung FR geneigt am Tragarm 15 anzuordnen. Im einfachsten Fall kann die besonders vorteilhafte 45°-Neigung oder jede beliebige andere Neigung der Schwenkachse 18 zur Fahrtrichtung dadurch erreicht werden, daß das rückwärtige Ende des Tragarms 15 um die gewünschte Neigung geschränkt ausgeführt ist.

Das Prallelement 12 kann zudem in seinen Abmessungen so bemessen und in seinem in Fahrtrichtung FR gesehenen Abstand zu den Rechkreiseln 7 so festgelegt sein, daß das in der Nichtarbeitsposition 12^{II} befindliche Prallelement 12 nach dem Verschwenken des äußeren Rechkreisels 7 von der Arbeits- in die Transportstellung eine Lage 12^{III} einnimmt, in der das Prallelement 12 die Rechzinken 11 des die Arbeitsbreite begrenzenden Rechkreisels 7 im rückwärtigen Bereich der Heuwerbungsmaschine 1 wenigstens teilweise überdeckt. Ein entsprechend steifes Prallelement 12 kann damit neben einer Abschirmung der Rechzinken 11 gleichzeitig die Funktion von bisher separat angeordneten Warntafeln 26 übernehmen, so daß durch Teileeinsparung eine Konstruktionsvereinfachung erreicht werden kann.

Auf eine elegante Verbringung des Prallelements 12 in die Arbeits- oder Nichtarbeitsposition 12^{I}, 12^{II}, 12^{III} verzichtend, kann das Prallelement 12 auch über eine in Fahrtrichtung FR verlaufende Drehachse 27 oder über eine quer zur Fahrtrichtung FR verlaufende Schwenkachse 28 am verschwenkbaren äußeren Rechkreisel 7 angelenkt sein, wobei die Verstellung wie bereits zuvor beschrieben entweder manuell oder fernbetätigt durch nicht dargestellte hydraulische, pneumatische oder mechanische Verstellmittel vorgesehen werden kann. Wie bereits für ein um eine schräg zur Fahrtrichtung FR verlaufende Schwenkachse 18 verschwenkbares Prallelement 12 anhand des Verstellmechanismus 13 beschrieben, können nicht näher dargestellte Verstellmechanismen 29, 30 vorgesehen sein, die das Verschwenken und Arretieren des Prallelementes in wenigstens zwei Positionen, nämlich einer Arbeitsposition 12^{I} und einer Nichtarbeitsposition 12^{IV} ermöglichen, wobei im einfachsten Fall ein an die veränderten Bedingungen angepaßter Verstellmechanismus 13 sinngemäß angewendet werden kann. Während die mittels Drehachse 27 oder Schwenkachse 29 erreichbare Arbeitsposition 12^{I} des Prallelementes 12 der bereits beschiebenen Arbeitsposition 12^{I} entspricht, nimmt das Prallelement 12 nun in Abhängigkeit von der Achsenausführung 27, 29 zwar ebenfalls eine Nichtarbeitsposition 12^{IV} im rückwärtigen Bereich der Heuwerbungsmaschine 1 und unter Umständen oberhalb der äußeren Rechkreisel 7 ein, jedoch ist das Prallelement 12 in dieser Position 12^{IV} auch in Fahrtrichtung FR weisend, innerhalb der Transportabmessungen liegend oder stehend ausgerichtet.

### Bezugszeichenliste

- 1: Heuwerbungsmaschine
- 2: Hauptrahmen
- 3: Anbaubock
- 4: Hilfsrahmen
- 5: Schwenkachse
- 6: Seitenrahmen
- 7: Rechkreisel
- 8: Laufrad
- 9: Boden
- 10: Zinkenarm
- 11: Rechzinken
- 12: Prallelement
- 12^{I}: Arbeitsposition
- 12^{II}: Nichtarbeitsposition
- 12^{III}: Nichtarbeitsposition
- 12^{IV}: Nichtarbeitsposition
- 13: Verstellmechanismus
- 14: Halteflansch
- 15: Tragarm
- 16: Bohrung
- 17: Bohrung
- 18: Schwenkachse
- 19: Bolzen
- 20: Halteflansch
- 21: Verbindungsstrebe
- 22: Öffnung
- 23: Absteckbolzen
- 24: Feder
- 25: Pfeilrichtung
- 26: Wamtafel
- 27: Drehachse
- 28: Schwenkachse
- 29: Verstellmechanismus
- 30: Verstellmechanismus
- 31: Kreiselachse
- 32: Einstellbereich

- FR: Fahrtrichtung

## Patentansprüche

1. Heuwerbungsmaschine zum Bearbeiten vom am Boden liegendem Erntegut, mit mehreren nebeneinander und quer zur Fahrtrichtung (FR) angeordneten um annähernd vertikale Achsen umlaufenden Rechzinken (11) tragenden als Rechkreisel (7) ausgeführten Arbeitsorganen, und deren Rechkreisel (7) von einem Hauptrahmen (2) und sich beidseitig des Hauptrahmens (2) über in Fahrtrichtung (FR) verlaufende Schwenkachsen (5) anschließende Seitenrahmen (6) aufgenommen werden, und wobei zumindest die äußeren Rechkreisel (7) um in Fahrtrichtung (FR) verlaufende Schwenkachsen (5) von einer Arbeits- in eine Transportstellung und umgekehrt verschwenkbar sind, **dadurch gekennzeichnet, dass** wenigstens einem verschwenkbaren äußeren Rechkreisel (7) eine schräg zur Fahrtrichtung (FR) verlaufende Schwenkachse (18) zugeordnet ist, die ein Prallelement (12) in der Weise verschwenkbar aufnimmt, dass das Prallelement (12) in Arbeitsposition (12^{I}) im rückwärtigen Bereich wenigstens eines äußeren Rechkreisels (7) in Fahrtrichtung (FR) weisend und in Nichtarbeitsstellung (12") annähernd quer zur Fahrtrichtung (FR) weisend und oberhalb dieses äußeren Rechkreisels (7) angeordnet ist.

2. Heuwerbungsmaschine nach Anspruch 1,
**dadurch gekennzeichnet,**
**dass** die Schwenkachse (18) um etwa 45° zur Fahrtrichtung (FR) geneigt angeordnet ist.

3. Heuwerbungsmaschine nach einem oder mehreren der vorhergehenden Ansprüche,
**dadurch gekennzeichnet,**
**dass** die Schwenkachse (18) durch einen verdrehbaren Bolzen (19) gebildet wird.

4. Heuwerbungsmaschine nach einem oder mehreren der vorhergehenden Ansprüche,
**dadurch gekennzeichnet,**
**dass** die Schwenkachse (18) in wenigstens zwei Positionen feststellbar ist.

5. Heuwerbungsmaschine nach Anspruch 4,
**dadurch gekennzeichnet,**
**dass** die Feststellbarkeit der Schwenkachse (18) durch einen verschiebbaren Absteckbolzen (23) realisiert wird, der zudem im Zusammenwirken mit einer Feder (24) als Schnappverschluss arbeiten kann.

6. Heuwerbungsmaschine nach Anspruch 3,
**dadurch gekennzeichnet,**
**dass** das Verschwenken des Prallelementes (12) um die Schwenkachse (18) manuell erfolgen kann.

7. Heuwerbungsmaschine nach Anspruch 6,
**dadurch gekennzeichnet,**
**dass** das Verschwenken des Prallelementes (12) um die Schwenkachse (18) fembetätigt durch hydraulische, pneumatische oder mechanische Verstellmittel vorgenommen werden kann.

8. Heuwerbungsmaschine nach einem oder mehreren der vorhergehenden Ansprüche,
**dadurch gekennzeichnet,**
**dass** sich das Prallelement (12) beim Verschwenken von der Arbeits- in die Nichtarbeitsposition (12^{I}, 12^{II}) in vertikaler Richtung um annähernd 180° verdreht.

9. Heuwerbungsmaschine nach einem oder mehreren der vorhergehenden Ansprüche,
**dadurch gekennzeichnet,**
**dass** das in Nichtarbeitsposition (12^{II}) verschwenkte Prallelement (12) beim Verschwenken des ihm zugeordneten äußeren Rechkreisels (7) um eine in Fahrtrichtung (FR) verlaufende Schwenkachse (5) in Transportstellung eine Lage (12^{III}) einnimmt, in der es die Rechzinken (11) des oder der nach außen weisenden Rechkreisel (7) im rückwärtigen Bereich wenigstens teilweise abschirmt und die äußere Begrenzung der Transportbreite bildet.

10. Heuwerbungsmaschine zum Bearbeiten vom am Boden liegendem Emtegut, mit mehreren nebeneinander und quer zur Fahrtrichtung (FR) angeordneten um annähernd vertikale Achsen umlaufenden Rechzinken (11) tragenden als Rechkreisel (7) ausgeführten Arbeitsorganen, und deren Rechkreisel (7) von einem Hauptrahmen (2) und sich beidseitig des Hauptrahmens (2) über in Fahrtrichtung (FR) verlaufende Schwenkachsen (5) anschließende Seitenrahmen (6) aufgenommen werden, und wobei zumindest die äußeren Rechkreisel (7) um in Fahrtrichtung (FR) verlaufende Schwenkachsen (5) von einer Arbeits- in eine Transportstellung und umgekehrt verschwenkbar sind, **dadurch gekennzeichnet, dass** wenigstens einem verschwenkbaren äußeren Rechkreisel (7) eine in Fahrtrichtung (FR) verlaufende Drehachse (27) zugeordnet ist, die ein Prallelement (12) in der Weise verschwenkbar aufnimmt, dass das Prallelement (12) in Arbeitsposition (12^{I}) im rückwärtigen Bereich wenigstens eines äußeren Rechkreisels (7) in Fahrtrichtung weisend und in Nichtarbeitsstellung (12^{IV}) ebenfalls in Fahrtrichtung (FR) weisend im rückwärtigen Bereich und/oder oberhalb dieses äußeren Rechkreisels (7) angeordnet ist.

11. Heuwerbungsmaschine nach Anspruch 10,
**dadurch gekennzeichnet,**
**dass** die Drehbewegung der Drehachse (27) begrenzt ist.

12. Heuwerbungsmaschine nach einem oder mehreren der Ansprüche 10 bis 11,
**dadurch gekennzeichnet,**
**dass** die Drehachse (27) mittels Verstellmechanismus (30) verschiedene Raststellungen einnehmen kann.

13. Heuwerbungsmaschine zum Bearbeiten vom am Boden liegendem Erntegut, mit mehreren nebeneinander und quer zur Fahrtrichtung (FR) angeordneten um annähernd vertikale Achsen umlaufenden Rechzinken (11) tragenden als Rechkreisel (7) ausgeführten Arbeitsorganen, und deren Rechkreisel (7) von einem Hauptrahmen (2) und sich beidseitig des Hauptrahmens (2) über in Fahrtrichtung (FR) verlaufende Schwenkachsen (5) anschließende Seitenrahmen (6) aufgenommen werden, und wobei zumindest die äußeren Rechkreisel (7) um in Fahrtrichtung (FR) verlaufende Schwenkachsen (5) von einer Arbeits- in eine Transportstellung und umgekehrt verschwenkbar sind, **dadurch gekennzeichnet dass** wenigstens einem verschwenkbaren äußeren Rechkreisel (7) eine quer zur Fahrtrichtung (FR) verlaufende Schwenkachse (28) zugeordnet ist, die ein Prallelement (12) in der Weise verschwenkbar aufnimmt, dass das Prallelement (12) in Arbeitsposition (12^{I}) im rückwärtigen Bereich wenigstens eines äußeren Rechkreisels (7) in Fahrtrichtung (FR) weisend und in Nichtarbeitsstellung (12^{IV}) vertikal zur Fahrtrichtung (FR) weisend und oberhalb dieses äußeren Rechkreisels (7) angeordnet ist.

14. Heuwerbungsmaschine nach Anspruch 13,
**dadurch gekennzeichnet,**
**dass** die Schwenkachse (28) mittels Verstellmechanismus (29) verschiedene Raststellungen einnehmen kann.

## Claims

1. A hay making machine for dealing with crop material which is lying on the ground, comprising a plurality of working members which are arranged in juxtaposed relationship and transversely with respect to the direction of travel (FR) and are in the form of raking rotors (7) and rotate about approximately vertical axes and carry raking tines (11), and the raking rotors (7) of which are carried by a main frame (2) and side frames (6) which are joined at both sides of the main frame (2) by way of pivot axes (5) extending in the direction of travel (FR), and wherein at least the outer raking rotors (7) are pivotable about pivot axes (5) extending in the direction of travel (FR) from a working position into a transport position and vice-versa, **characterised in that** associated with at least one pivotable outer raking rotor (7) is a pivot axis (18) which extends inclinedly with respect to the direction of travel (FR) and which pivotably carries an impingement element (12) in such a way that the impingement element (12) is arranged in the working position (12^{I}) in the rearward region of at least one outer raking rotor (7) facing in the direction of travel (FR) and in the non-working position (12^{II}) it is arranged facing approximately transversely with respect to the direction of travel (FR) and above said outer raking rotor (7).

2. A hay making machine according to claim 1 **characterised in that** the pivot axis (18) is arranged inclined through about 45° relative to the direction of travel (FR).

3. A hay making machine according to one or more of the preceding claims **characterised in that** the pivot axis (18) is formed by a rotatable pin (19).

4. A hay making machine according to one or more of the preceding claims **characterised in that** the pivot axis (18) can be fixed in at least two positions.

5. A hay making machine according to claim 4 **characterised in that** fixability of the pivot axis (18) is afforded by a displaceable pegging pin (23) which can also operate in conjunction with a spring (24) as a snap-action lock.

6. A hay making machine according to claim 3 **characterised in that** the pivotal movement of the impingement element (12) about the pivot axis (18) can be effected manually.

7. A hay making machine according to claim 6 **characterised in that** the pivotal movement of the impingement element (12) about the pivot axis (18) can be effected under remote control by hydraulic, pneumatic or mechanical adjusting means.

8. A hay making machine according to one or more of the preceding claims **characterised in that** the impingement element (12) rotates in a vertical direction through approximately 180° in the pivotal movement from the working position into the non-working position (12^{I}, 12^{II}).

9. A hay making machine according to one or more of the preceding claims **characterised in that** the impingement element (12) when pivoted into the non-working position (12^{II}), upon pivotal movement of the outer raking rotor (7) associated therewith about a pivot axis (5) extending in the direction of travel (FR), in the transport position, assumes a position (12^{III}) in which it at least partially shields the raking tines (11) of the outwardly facing raking rotor or rotors (7) in the rearward region and forms the outer boundary of the transport width.

10. A hay making machine for dealing with crop material which is lying on the ground, comprising a plurality of working members which are arranged in juxtaposed relationship and transversely with respect to the direction of travel (FR) and are in the form of raking rotors (7) and rotate about approximately vertical axes and carry raking tines (11), and the raking rotors (7) of which are carried by a main frame (2) and side frames (6) which are joined at both sides of the main frame (2) by way of pivot axes (5) extending in the direction of travel (FR), and wherein at least the outer raking rotors (7) are pivotable about pivot axes (5) extending in the direction of travel (FR) from a working position into a transport position and vice-versa, **characterised in that** associated with at least one pivotable outer raking rotor (7) is a rotary axis (27) which extends in the direction of travel (FR) and which pivotably carries an impingement element (12) in such a way that the impingement element (12) is arranged in the working position (12^{I}) in the rearward region of at least one outer raking rotor (7) facing in the direction of travel (FR) and in the non-working position (12^{IV}) also facing in the direction of travel FR in the rearward region and/or above said outer raking rotor (7).

11. A hay making machine according to claim 10 **characterised in that** the rotary movement of the rotary axis (27) is limited.

12. A hay making machine according to one or more of claims 10 and 11 **characterised in that** the rotary axis (27) can assume various latching positions by means of adjusting mechanisms (30).

13. A hay making machine for dealing with crop material which is lying on the ground, comprising a plurality of working members which are arranged in juxtaposed relationship and transversely with respect to the direction of travel (FR) and are in the form of raking rotors (7) and rotate about approximately vertical axes and carry raking tines (11), and the raking rotors (7) of which are carried by a main frame (2) and side frames (6) which are joined at both sides of the main frame (2) by way of pivot axes (5) extending in the direction of travel (FR), and wherein at least the outer raking rotors (7) are pivotable about pivot axes (5) extending in the direction of travel (FR) from a working position into a transport position and vice-versa, **characterised in that** associated with at least one pivotable outer raking rotor (7) is a pivot axis (28) which extends transversely with respect to the direction of travel (FR) and which pivotably carries an impingement element (12) in such a way that the impingement element (12) is arranged in the working position (12^{I}) in the rearward region of at least one outer raking rotor (7) facing in the direction of travel (FR) and in the non-working position (12^{IV}) it is arranged facing vertically with respect to the direction of travel (FR) and above said outer raking rotor (7).

14. A hay making machine according to claim 13 **characterised in that** the pivot axis (28) can assume various latching positions by means of adjusting mechanisms (29).

## Revendications

1. Machine de fenaison pour le traitement d'un produit récolté reposant sur le sol, avec plusieurs organes de travail juxtaposés et disposés perpendiculairement à la direction de déplacement (FR), tournant autour d'axes sensiblement verticaux, prenant la forme de râteaux rotatifs (7) et portant des dents faneuses (11), ces râteaux rotatifs (7) étant portés par un bâti principal (2) et des bâtis latéraux (6) montés sur le bâti principal (2) des deux côtés par des axes de basculement (5) orientés dans la direction de déplacement (FR), les râteaux rotatifs (7) extérieurs pouvant au moins être basculés entre une position de travail et une position de transport, et inversement, **caractérisée en ce qu'**au moins un râteau rotatif (7) extérieur basculant est associé à un axe dé basculement (18) orienté en biais par rapport à la direction de déplacement (FR) et portant un élément de déflexion (12) pouvant basculer de manière à ce que l'élément de déflexion (12) soit disposé, dans une position de travail (12^{I}), à l'arrière d'au moins un râteau rotatif (7) et orienté dans la direction de déplacement (FR) et, dans une position de non-travail (12^{II}), de manière sensiblement perpendiculaire à la direction de déplacement (FR) et au-dessus de ce râteau rotatif (7) extérieur.

2. Machine de fenaison selon la revendication 1, **caractérisée en ce que** l'axe de basculement (18) est orienté d'environ 45° par rapport à la direction de déplacement (FR).

3. Machine de fenaison selon une ou plusieurs des revendications précédentes, **caractérisée en ce que** l'axe de basculement (18) est formé d'un goujon tournant (19).

4. Machine de fenaison selon une ou plusieurs des revendications précédentes, **caractérisé en ce que** l'axe de basculement (18) peut être verrouillé dans au moins deux positions.

5. Machine de fenaison selon la revendication 4, **caractérisée en ce que** le verrouillage de l'axe de basculement (18) est réalisé par une goupille (23) qui, en coopérant avec un ressort (24), peut fonctionner comme un verrou à déclic.

6. Machine de fenaison selon la revendication 3, **caractérisée en ce que** le basculement de l'élément de déflexion (12) autour de l'axe de basculement (18) peut se faire manuellement.

7. Machine de fenaison selon la revendication 6, **caractérisée en ce que** le basculement de l'élément de déflexion (12) autour de l'axe de basculement (18) peut être télécommandé à l'aide de moyens de positionnement hydrauliques, pneumatiques ou mécaniques.

8. Machine de fenaison selon une ou plusieurs des revendications précédentes, **caractérisée en ce que** l'élément de déflexion (12), lors de son basculement entre la position de travail (12^{I}) et la position de non-travail (12^{II}), pivote dans la direction verticale de sensiblement 180°.

9. Machine de fenaison selon une ou plusieurs des revendications précédentes, **caractérisée en ce que** l'élément de déflexion (12) basculé dans la position de non-travail (12^{II}), après le basculement en position de transport du râteau rotatif (7) extérieur qui lui correspond autour d'un axe de basculement (5) orienté dans la direction de déplacement (FR), occupe une position (12^{III}) dans laquelle il masque au moins partiellement par l'arrière les dents faneuses (11) du ou des râteaux rotatifs (7) orientés vers l'extérieur et forme la limite extérieure de la largeur de transport.

10. Machine de fenaison pour le traitement d'un produit récolté reposant sur le sol, avec plusieurs organes de travail juxtaposés et disposés perpendiculairement à la direction de déplacement (FR), tournant autour d'axes sensiblement verticaux, prenant la forme de râteaux rotatifs (7) et portant des dents faneuses (11), ces râteaux rotatifs (7) étant portés par un bâti principal (2) et des bâtis latéraux (6) montés sur le bâti principal (2) des deux côtés par des axes de basculement (5) orientés dans la direction de déplacement (FR), les râteaux rotatifs (7) extérieurs pouvant au moins être basculés entre une position de travail et une position de transport, et inversement, **caractérisée en ce qu'**au moins un râteau rotatif (7) extérieur basculant est associé à un axe de rotation (27) orienté dans la direction de déplacement (FR) et portant un élément de déflexion (12) pouvant basculer de manière à ce que l'élément de déflexion (12) soit disposé, dans une position de travail (12^{I}) , à l'arrière d'au moins un râteau rotatif (7) et orienté dans la direction de déplacement (FR) et, dans une position de non-travail (12^{IV}), soit également orienté dans la direction de déplacement (FR) à l'arrière et/ou au-dessus de ce râteau rotatif (7) extérieur.

11. Machine de fenaison selon la revendication 10, **caractérisée en ce que** le mouvement de rotation de l'axe de rotation (27) est limité.

12. Machine de fenaison selon une ou plusieurs des revendications 10 à 11, **caractérisée en ce que** l'axe de rotation (27) peut prendre différentes positions encliquetées à l'aide d'un mécanisme de positionnement (30).

13. Machine de fenaison pour le traitement d'un produit récolté reposant sur le sol, avec plusieurs organes de travail juxtaposés et disposés perpendiculairement à la direction de déplacement (FR), tournant autour d'axes sensiblement verticaux, prenant la forme de râteaux rotatifs (7) et portant des dents faneuses (11), ces râteaux rotatifs (7) étant portés par un bâti principal (2) et des bâtis latéraux (6) montés sur le bâti principal (2) des deux côtés par des axes de basculement (5) orientés dans la direction de déplacement (FR), les râteaux rotatifs (7) extérieurs pouvant au moins être basculés entre une position de travail et une position de transport, et inversement, **caractérisée en ce qu'**au moins un râteau rotatif (7) extérieur basculant est associé à un axe de basculement (28) perpendiculaire à la direction de déplacement (FR) et portant un élément de déflexion (12) pouvant basculer de manière à ce que l'élément de déflexion (12) soit disposé, dans une position de travail (12^{I}), à l'arrière d'au moins un râteau rotatif (7) et orienté dans la direction de déplacement (FR) et, dans une position de non-travail (12^{IV}), soit orienté verticalement par rapport à la direction de déplacement (FR) et disposé au-dessus de ce râteau rotatif (7) extérieur.

14. Machine de fenaison selon la revendication 14, **caractérisée en ce que** l'axe de basculement (28) peut prendre différentes positions encliquetées à l'aide d'un mécanisme de positionnement (30).
